# EUROPÄISCHE PATENTSCHRIFT

(11) **EP 1 402 468 B1**
(45) Veröffentlichungstag und Bekanntmachung des Hinweises auf die Patenterteilung: **09.11.2005**
(21) Anmeldenummer: 02735044.6
(22) Anmeldetag: 17.04.2002
(51) Int. Cl.: G06K 11/18, G06K 11/12, G01B 3/12

(54) **GERAET MIT EINEM SENSOR**
DEVICE EQUIPPED WITH A SENSOR
APPAREIL MUNI D'UN DETECTEUR

(30) Priorität: 15.05.2001 DE 10123543
(43) Veröffentlichungstag der Anmeldung: 31.03.2004
(73) Patentinhaber: ROBERT BOSCH GMBH, 70442 Stuttgart (DE)
(72) Erfinder: LEUTZ, Steffen, 74889 Sinsheim (DE); HOFFMANN, Erhard, 72657 Altenriet (DE); CLAUSS, Stefan, 70771 Leinfelden-Echterdingen (DE)
(86) Internationale Anmeldenummer: PCT/DE2002/001416
(87) Internationale Veröffentlichungsnummer: WO 2002/093466

(56) Entgegenhaltungen:
- EP-A- 0 311 113
- EP-A- 0 336 015
- EP-A- 0 445 426
- US-A- 5 512 892
- US-A- 5 560 119
- US-A- 5 565 671
- US-A- 5 648 798
- US-A- 5 841 425
- 'Bedienungsanleitung Hexaglot Quictionary', [Online] 31 Dezember 1997, Seiten 1 - 32 Gefunden im Internet: <URL:http://www.hexaglot.de/manuals/Quickti onary-Germanmanual.pdf> [gefunden am 2004-04-29]

## Beschreibung

### Stand der Technik

Die Erfindung geht von einem Gerät mit einem Sensor nach dem Oberbegriff des Anspruchs 1 aus.

Es sind Geräte bekannt, die mit einer Hand über eine Oberfläche verfahren werden, dabei mittels eines Sensors Eigenschaften der Oberfläche ermitteln und die erfassten Daten über eine Anzeigevorrichtung, z.B. ein Display, anzeigen. Solche Geräte sind z.B. auch Messgeräte, mit denen Entfernungen, Flächen oder dgl. gemessen werden können. Bei der Anzeige besteht je nach Verfahr- und Griffkonzept das Problem, dass bei bestimmten Verfahrrichtungen die Anzeige auf dem Kopf steht und dadurch schlecht ablesbar ist, so dass Ablesefehler entstehen, insbesondere wenn die auf dem Kopf stehenden Ziffern als andere Ziffern gedeutet werden können, die nicht auf dem Kopf stehen, z.B. 6 und 9. Eine Lösungsmöglichkeit dieses Problems besteht darin, dass der Bediener des Geräts über ein Bedienelement manuell die Ausrichtung der Anzeige vorgibt. Dies ist jedoch lästig und wird daher häufig versäumt.

Aus der US 5,841,421 ist eine Computer-Maus bekannt, die für die Bedienung mit einer rechten oder einer linken Hand geeignet ist. Abhängig von der Bedienung mit der rechten bzw. linken Hand werden die Funktionen umgeschaltet, in dem ein Sensor in einer Griffmulde für einen Daumen durch diesen aktiviert wird oder nicht. An der Computer-Maus sind auf diametral einander gegenüberliegenden Seiten Griffmulden angeordnet, von denen eine für einen rechten Daumen und die andere für einen linken Daumen vorgesehen ist. Wird die Computer-Maus mit der rechten Hand gefasst, liegt der rechte Daumen in der Griffmulde für den rechten Daumen, während in dem anderen Fall der linke Daumen in der Griffmulde für den linken Daumen liegt. In mindestens einer Griffmulde ist ein Sensor angeordnet, der von dem entsprechenden Daumen aktiviert wird. Ist in der Mulde für den rechten Daumen ein Sensor angebracht, so kann aus der Aktivierung des Sensors geschlossen werden, dass die Computer-Maus mit der rechten Hand geführt wird. Ist der Sensor nicht aktiviert, kann daraus geschlossen werden, dass die Computer-Maus mit der linken Hand geführt wird. Die Computer-Maus kann auch in jeder der Griffmulden einen Sensor aufweisen. In diesem Fall wird auf eine Führung durch die rechte bzw. linke Hand geschlossen, wenn der Sensor in der entsprechenden Griffmulde aktiviert wird. Wird kein Sensor aktiviert oder werden beide Sensoren gleichzeitig aktiviert, wird auf eine Fehlbedienung geschlossen, wobei die Maus kein Signal an den Computer sendet. Die Ansprüche sind gegen dieses Dokument abgegrenzt.

Aus der EP 0 445 426 A2 ist eine Schieblehre mit einer digitalen Messwertanzeige bekannt. Diese kann durch einen Umschalter zwischen einer Rechts- und Linkshandbedienung umgeschaltet werden, sodass die Messwerte immer in einer normalen Darstellung abgelesen werden können.

Aus der US 5,560,119 ist ein Entfernungsmessgerät bekannt, dessen Messrad über eine Karte geführt werden kann. Die Messstrecke wird digital angezeigt. Je nach Haltung des Messgeräts mit der rechten oder linken Hand ändert sich die Lesbarkeit der Zahlen.

Unter dem Markennamen "Hexaglot Quicktionary" werden von der Firma Wizcom handliche Geräte verkauft, die als Textscanner (und Übersetzungscomputer) dienen. Diese Geräte (vgl. z.B. WO 98/03932) sind zwischen Rechts- und Linkshänderbetrieb umschaltbar, wobei das Display entsprechend umgeschaltet wird. Eine Gebrauchsanweisung findet man im Internet unter http://www.hexaglot.de/manuals/Quicktionary-Germanmanual.pdf

### Vorteile der Erfindung

Nach der Erfindung befinden sich für die Hand auf zwei etwa diametral gegenüberliegenden Seiten eines Griffs Griffflächen, von denen mindestens eine einen Sensor aufweist, der die Anzahl der an dieser Grifffläche anliegenden Finger erfasst. Dabei können der Griff bzw. die Griffflächen integraler Bestandteil des Gehäuses des Geräts sein. Wesentlich ist lediglich, dass der Griff eine bevorzugte Stelle zum Handhaben des Geräts am Gehäuse darstellt, so dass das Gerät an dieser Stelle gefasst wird.

Die Erfindung geht von der Erkenntnis aus, dass an den diametral gegenüberliegenden Griffflächen eine unterschiedliche Anzahl von Fingern einer Hand anliegen. Während an einer Grifffläche nur der Daumen anliegt, liegen an der anderen Grifffläche mehrere Finger der Hand an. Da in der Regel der Daumen beim Greifen dem Bediener zugewandt ist, kann aus der

Lage des Daumens und der übrigen Finger auf die Blickrichtung des Bedieners geschlossen und somit die Anzeige der Anzeigevorrichtung der Blickrichtung zugeordnet werden.

Die Sensoren detektieren die Anzahl der an der jeweiligen Grifffläche anliegenden Finger und erzeugen ein Signal, das die Anzeige der Anzeigevorrichtung entsprechend ausrichtet. Für diesen Zweck kommen alle geeigneten Arten von Sensoren in Frage, z.B. Sensoren, die nach einem resistiven, kapazitiven oder induktiven Messverfahren arbeiten, indem sich entsprechend der Anzahl der anliegenden Finger der Widerstand, die Kapazität oder die Induktion eines Messkreises ändert, in dem die Sensoren liegen. Es können aber auch fotoelektrische Sensoren verwendet werden, von denen durch die Finger mehr oder weniger überdeckt werden und damit den Lichteinfall verändern. Die Signale der Sensoren können mit festen Referenzwerten verglichen werden, die charakteristisch für den Kontakt mit dem Daumen oder mit den übrigen Fingern sind, so dass erkannt wird, ob die Grifffläche dem Körper des Bedieners zugewandt oder abgewandt ist. Sind an jeder Grifffläche Sensoren vorgesehen, können ihre Signale in der Auswerteeinheit untereinander verglichen werden.

Eine einfache Ausgestaltung ergibt sich durch das resistive Messverfahren, bei dem jeweils an jeder Grifffläche zwei benachbarte Kontaktleisten vorgesehen sind und der Widerstand eines durch die Finger geschlossenen Messkreises durch eine Auswerteeinheit ausgewertet wird.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine schematische Draufsicht zweier erfindungsgemäßer Geräte in einer entgegengesetzten Ausrichtung auf einer Oberfläche,
- Fig. 2: zwei Messkreise in einer schematischen Abwicklung,

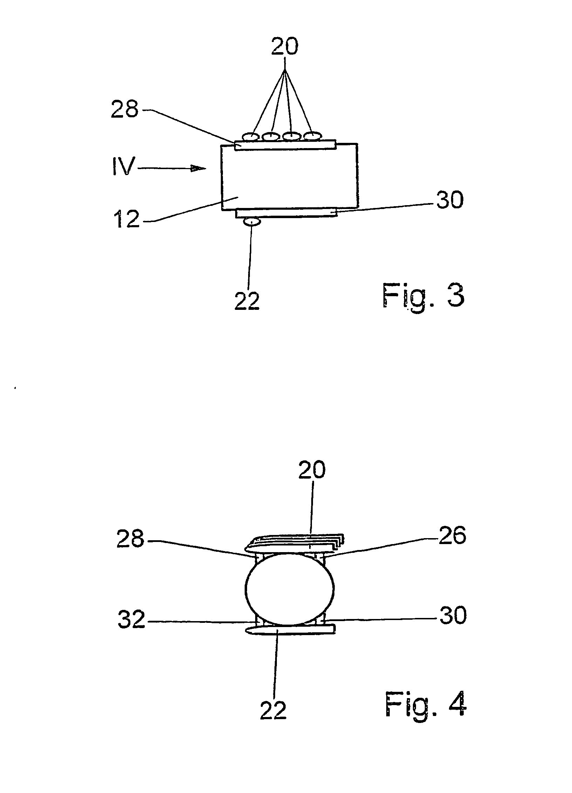

- Fig. 3: eine vergrößerte, schematische Draufsicht eines Griffs und
- Fig. 4: eine schematische Ansicht eines Griffs in Richtung eines Pfeils IV in Fig. 3.

### Beschreibung der Ausführungsbeispiele

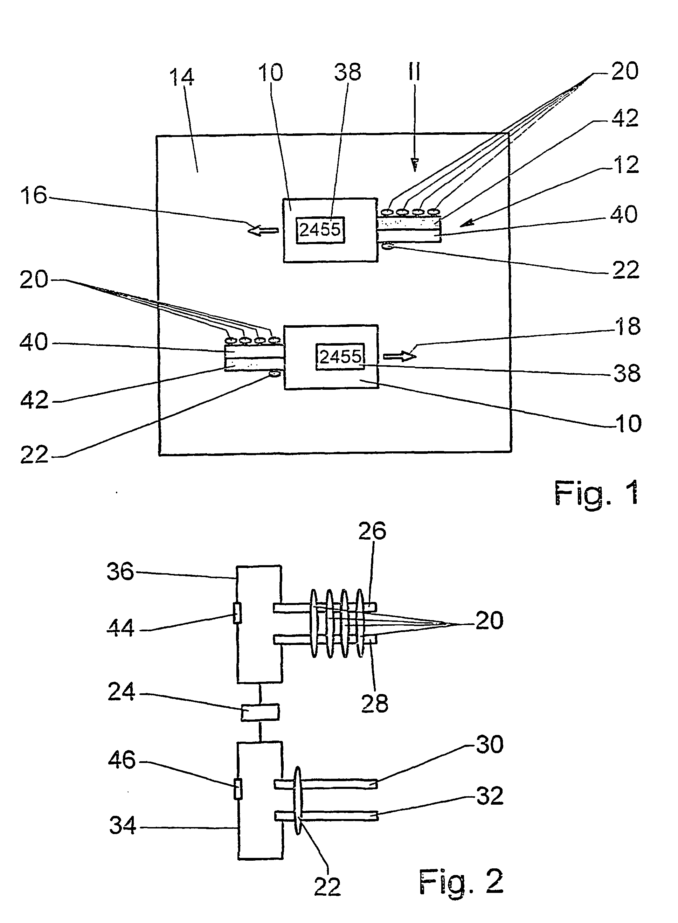

Ein Gerät 10, z.B. ein Messgerät, wird von Hand über eine Oberfläche 14 geführt. Das Gerät 10 besitzt einen nicht näher dargestellten Sensor, der zur Oberfläche 14 weist und einen Griff 12 mit zwei diametral gegenüberliegenden Griffflächen 40 und 42. Das Gerät 10 hat ferner eine Anzeigevorrichtung 38, an der die vom Sensor erfassten Daten angezeigt werden. Wird das Gerät 10 entsprechend der oberen Darstellung in Fig. 1 mit der rechten Hand erfasst und in üblicher Weise in die Führungsrichtung 16 verfahren, liegt ein Daumen 22 der Hand an der Grifffläche 40 an, während die übrigen Finger 20 an der Grifffläche 42 anliegen.

In Längsrichtung des Griffs 12 sind in die Grifffläche 42 Kontaktleisten 26, 28 und in die Grifffläche 40 Kontaktleisten 30, 32 eingelassen, die in einer schematischen Abwicklung in Fig. 2 dargestellt sind. Der Daumen 22 überbrückt die Kontaktleisten 30, 32 und schließt einen Messkreis 34, dessen Widerstand 46 durch eine Auswerteeinheit 24 ausgewertet wird. Diese wertet in gleicher Weise einen Widerstand 44 eines Messkreises 36 aus, der durch die übrigen Finger 20 geschlossen ist, die an den Kontaktleisten 26, 28 der Grifffläche 42 anliegen. Der Widerstand 44 bzw. 46 beträgt je nach der Anzahl der überbrückenden Finger 20, 22 ca. 0,3 M-Ohm bis 2 M-Ohm, wobei der Widerstand 44 des Messkreises 36, an dem mehrere Finger 20 beteiligt sind, deutlich kleiner ist als der Widerstand 46 des Messkreises 34, an dem nur der Daumen 22 beteiligt ist. Somit kann die Auswerteeinheit 24 ein eindeutiges Signal für die Anzeige der Anzeigevorrichtung 38 erzeugen, indem sie die Widerstandswerte der beiden Messkreise 34 und 36 miteinander vergleicht. Ist der Widerstandswert des Messkreises 34 größer als der des Messkreises 36, liegt die rechte Hand des Bedieners an dem Griff 12, während im umgekehrten Fall die linke Hand den Griff 12 hält.

Die untere Hälfte von Fig. 1 zeigt das Gerät 10 um 180° gedreht mit einer Führungsrichtung 18. Der Griff 12 wird nun mit der linken Hand gegriffen, wobei der Daumen 22 an der Grifffläche 42 mit den Kontaktleisten 26, 28 anliegt, während die übrigen Finger 20 an der Grifffläche 40 mit den Kontaktleisten 30, 32 anliegen. Dadurch erzeugt die Auswerteeinheit 24 ein Signal, durch das die Anzeige der Anzeigevorrichtung 38 um 180° gedreht wird, so dass die Anzeige vom Bediener stets in der richtigen Ausrichtung gelesen werden kann.

Sind nur an einer Grifffläche 40 oder 42 Sensoren 26, 28 bzw. 30, 32 vorgesehen, können die Widerstandswerte des entsprechenden Messkreises mit einem festen Referenzwert verglichen werden. Ist der Widerstandswert größer als der Referenzwert, liegt nur der Daumen 22 an den Sensoren 26, 28 bzw. 30, 32 an, ist er kleiner, liegen die übrigen Finger 20 an den Sensoren 26, 28 bzw. 30, 32 an.

### Bezugszeichen

- 10: Gerät
- 12: Griff
- 14: Oberfläche
- 16: Führungsrichtung
- 18: Führungsrichtung
- 20: Finger
- 22: Daumen
- 24: Auswerteeinheit
- 26: Kontaktleiste
- 28: Kontaktleiste
- 30: Kontaktleiste
- 32: Kontaktleiste
- 34: Messkreis
- 36: Messkreis
- 38: Anzeigevorrichtung
- 40: Grifffläche
- 42: Grifffläche
- 44: Widerstand
- 46: Widerstand

## Patentansprüche

1. Gerät (10) mit einem Sensor zum erfassen von Daten, die über eine Anzeigevorrichtung (38) angezeigt werden, wobei das Gerät (10) mit einer Hand (20, 22) an zwei auf etwa diametral gegenüber liegenden Seiten eines Griffs (12) angeordneten Griffflächen (40, 42) mit einem Daumen (22) und mindestens einem der übrigen Finger (20) gefasst und über eine Oberfläche (14) geführt wird und mindestens eine Grifffläche (40, 42) einen weiteren Sensor (26, 28, 30, 32) aufweist, der von dem Daumen aktivierbar ist und das Gerät (10) zwischen einer Links- und Rechtshänderhandhabung umschaltet, **dadurch gekennzeichnet, dass** die Anzeigevorrichtung (38) ein fester Teil des Geräts (10) ist, dass der weitere Sensor (26, 28, 30, 32) auch von mehreren Fingern (20) aktivierbar ist und die Anzahl der an dieser Grifffläche (40, 42) anliegenden Finger (20, 22) erfasst und dass das Gerät (10) den Inhalt der Anzeigevorrichtung (38) je nach erkannter Anzahl der Finger (20, 22) zwischen einer Links- und Rechtshänderdarstellung umschaltet.

2. Gerät (10) nach Anspruch 1, **dadurch gekennzeichnet, dass** als Sensoren (26, 28, 30, 32) zwei benachbarte Kontaktleisten (26, 28 bzw. 30, 32) vorgesehen sind und der Widerstand eines durch die Finger (20, 22) geschlossenen Messkreises (34, 36) durch eine Auswerteeinheit (24) ausgewertet wird.

3. Gerät (10) nach Anspruch 1, **dadurch gekennzeichnet, dass** die Sensoren (26, 28, 30, 32) nach einem kapazitiven oder induktiven Messverfahren arbeiten.

4. Gerät (10) nach Anspruch 1, **dadurch gekennzeichnet, dass** die Sensoren (26, 28, 30, 32) fotoelektrische Sensoren sind.

5. Gerät (10) nach einem der vorhergehenden Ansprüche, **dadurch gekennzeichnet, dass** jeweils an den gegenüber liegenden Griffflächen (40, 42) Sensoren (26, 28; 30, 32) vorgesehen sind, wobei die Signale der Sensoren (26, 28; 30, 32) einer Grifffläche (40, 42) mit Signalen der Sensoren (26, 28; 30, 32) der anderen Grifffläche (40, 42) verglichen werden.

## Claims

1. Device (10) having a sensor for sensing data which is displayed by means of a display device (38), wherein the device (10) is grasped with a hand (20, 22) with a thumb (22) and at least one of the other fingers (20) on two gripping faces (40, 42) arranged on approximately diametrically opposite sides of a handle (12) and is guided over a surface (14), and at least one gripping face (40, 42) has a further sensor (26, 28, 30, 32) which can be activated by the thumb and switches over the device (10) between left-handed operation and right-handed operation, **characterized in that** the display device (38) is a fixed part of the device (10), **in that** the further sensor (26, 28, 30, 32) can also be activated by a plurality of fingers (20) and senses the number of fingers (20, 22) which are resting against this gripping face (40, 42), and **in that** the device (10) switches over the content of the display device (38) depending on the detected number of fingers (20, 22) between a left-handed display and right-handed display.

2. Device (10) according to Claim 1, **characterized in that** two adjacent contact strips (26, 28 and 30, 32) are provided as sensors (26, 28, 30, 32), and the resistance of a measuring circuit (34, 36) which is closed by the fingers (20, 22) is evaluated by means of an evaluation unit (24).

3. Device (10) according to Claim 1, **characterized in that** the sensors (26, 28, 30, 32) operate according to a capacitive or inductive measuring method.

4. Device (10) according to Claim 1, **characterized in that** the sensors (26, 28, 30, 32) are photoelectric sensors.

5. Device (10) according to one of the preceding claims, **characterized in that** sensors (26, 28; 30, 32) are provided on each of the gripping faces (40, 42) which lie opposite one another, wherein the signals of the sensors (26, 28; 30, 32) of one gripping face (40, 42) are compared with signals of the sensors (26, 28; 30, 32) of the other gripping face (40, 42).

## Revendications

1. Appareil (10) comportant un capteur pour saisir des données affichées par un dispositif d'affichage (38),
l'appareil (10) se prenant par une main (20, 22) avec le pouce (22) et au moins l'un des autres doigts (20) appliqués contre deux surfaces de préhension (40, 42) prévues sensiblement sur les côtés diamétralement opposés d'une poignée (12) et cet appareil se guidant sur une surface (14), et dont au moins une surface de préhension (40, 42) comporte un autre capteur (26, 28, 30, 32) activé par le pouce et qui commute l'appareil (10) entre une position d'utilisation pour droitier et pour gaucher,
**caractérisé en ce que**
le dispositif d'affichage (38) est une partie fixe de l'appareil (10),
l'autre capteur (26, 28, 30, 32) est activé par plusieurs doigts (20) et saisit le nombre de doigts (20, 22) appliqués contre cette surface de préhension (40, 42), et
l'appareil (10) commute le contenu du dispositif d'affichage (38) suivant le nombre reconnu de doigts (20, 22) entre la présentation pour un gaucher et pour un droitier.

2. Appareil (10) selon la revendication 1,
**caractérisé en ce que**
les capteurs (26, 28, 30, 32) sont constitués par deux barrettes de contact (26, 28 ou 30, 32) voisines et il exploite la résistance du circuit fermé (34, 36) passant par les doigts (20, 22) à l'aide d'une unité d'exploitation (24).

3. Appareil (10) selon la revendication 1,
**caractérisé en ce que**
les capteurs (26, 28, 30, 32) fonctionnent selon un procédé de mesure capacitif ou inductif.

4. Appareil (10) selon la revendication 1,
**caractérisé en ce que**
les capteurs (26, 28, 30, 32) sont des capteurs photoélectriques.

5. Appareil (10) selon l'une des revendications précédentes,
**caractérisé en ce que**
chaque surface de préhension opposée (40, 42) comporte des capteurs (26, 28 ; 30, 32),
les signaux des capteurs (26, 28 ; 30, 32) d'une surface de préhension (40, 42) étant comparés aux signaux des capteurs (26, 28 ; 30, 32) de l'autre surface de préhension (40, 42).
